# EUROPÄISCHE PATENTANMELDUNG

(11) **EP 2 082 993 A2**
(43) Veröffentlichungstag der Anmeldung: **29.07.2009**
(21) Anmeldenummer: 09000861.6
(22) Anmeldetag: 22.01.2009
(51) Int. Cl.: C03B 7/086, C03B 7/092

(54) **Vorrichtung zur gewichtskonstanten Portionierung von schmelzflüssigem Glas**

(30) Priorität: 24.01.2008 DE 102008005931
(71) Anmelder: Lindner, Walter, 94566 Riedhütte/Reichenberg (DE)
(72) Erfinder: Lindner, Walter, 94566 Riedhütte/Reichenberg (DE)
(74) Vertreter: Manitz, Finsterwald & Partner GbR

(57) **Zusammenfassung**

Es wird eine Vorrichtung zur gewichtskonstanten Portionierung von schmelzflüssigem Glas beschrieben, die einen Tropfenspeiser (1) aufweist, in dessen Schüsselhals (2) ein in Vertikalrichtung und/oder rotierend angetriebener Gewindesegmentplunger (4) vorgesehen ist und die axiale Erstreckung des für den Durchfluss maßgeblichen Teils des Gewindesegmentplungers (4) kleiner ist als der Radius der Schüsselhalsbohrung (2).

## Beschreibung

Die Erfindung betrifft eine Vorrichtung zur gewichtskonstanten Portionierung von schmelzflüssigem Glas mit einem über eine im Wesentlichen horizontale Rinne aus einem Vorratsbehälter mit schmelzflüssigem Glas beschickten Tropfenspeiser, in dessen als vertikale Bohrung ausgebildetem Schüsselhals und vor dessen Auslaufdüse ein in Vertikalrichtung und/oder rotierend angetriebener Plunger zur Beeinflussung des durch den Spalt zwischen Schüsselhals und Plunger strömenden Glases angeordnet ist, wobei der Plunger in Strömungsrichtung des Glases einen sich konisch erweiternden Anströmbereich, einen Mittelbereich und einen sich im Durchmesser verringernden Abströmbereich aufweist.

Eine Vorrichtung dieser Art ist aus der DE 198 09 878 A1 bekannt.

Derartige Vorrichtungen, die auch als Tropfenspeiser bezeichnet und mit glattem Plunger als Einfach- oder Mehrfachspeiser seit vielen Jahrzehnten in der Praxis eingesetzt werden, wurden hinsichtlich ihrer Ausgestaltung und Ansteuerung zur Erzielung von immer höheren Leistungen weiterentwickelt, wobei Durchsatzleistungen von über 200 t/Tag erreicht werden können.

Die bei den bekannten Vorrichtungen eingesetzten Schraubenplunger besitzen eine im Vergleich zu ihrem Durchmesser relativ große axiale Erstreckung und sind bevorzugt an ihrer Außenfläche mit mehrgängigen Gewindeansätzen versehen. Die derartige Plunger aufnehmende Schlüsselhälse müssen dabei noch länger sein als die Plunger, um eine einwandfreie Arbeitsweise der Plunger, die im Betrieb eine Aufwärts- und Abwärtsbewegung ausführen können, zu gewährleisten. Um zu verhindern, dass aufgrund des sich dabei ergebenden, langen Strömungsweges des Glases sich im Schüsselhals unerwünschte Temperaturreduzierungen im Glas ergeben, muss bei derartigen Vorrichtungen üblicherweise eine Beheizung des häufig aus Platin bestehenden Schüsselhalses erfolgen, was durch ein Hindurchleiten hoher elektrischer Ströme, eine indirekte Heizung durch außerhalb angebrachte Widerstandsheizelemente, durch Induktivheizung oder ähnliches erfolgen kann.

Durch diese Maßnahmen lässt sich zwar die angestrebte Funktion erreichen, aber es ergeben sich dabei auch gravierende Erhöhungen der Anlagenkosten und auch eine Verkomplizierung des Betriebs.

Neben dem Bestreben nach Leistungssteigerung von Standard-Tropfenspeisern mit glatten Plungern sind auch Entwicklungen hin zu kleineren Arbeitsgeschwindigkeiten bekannt, wobei versucht wurde, durch eine Reduzierung des Fließquerschnittes zwischen Plunger und Schüsselhals sowie eine Erhöhung der Glasviskosität durch Reduzierung der Glastemperatur die Ausströmgeschwindigkeit des Glases aus der Auslaufdüse unter Zuhilfenahme eines außen glatten Plungers zu beeinflussen. Problematisch ist dabei, dass sich aufgrund der sich einstellenden Abkühlung des Glases die Glasschmelze häufig zu zäh wird, so dass sich in der Regel die Glasportionen in den Nachfolgemaschinen nicht mehr gut verarbeiten lassen und häufig Qualitätseinbußen in Kauf genommen werden müssen.

Aufgabe der Erfindung ist es, eine insbesondere für kleinere Arbeitsgeschwindigkeiten geeignete Vorrichtung der eingangs angegebenen Art zu schaffen, die besonders kostengünstig realisiert werden kann und dabei die Lieferung von Glasportionen optimaler Temperatur und Viskosität sicherstellt.

Gelöst wird diese Aufgabe nach der Erfindung im Wesentlichen durch eine spezielle Gestaltung und Anpassung des Plungers an die zugehörige Schüsselhalsbohrung, wobei die axiale Erstreckung des den Strömungsspalt bestimmenden zylindrischen Mittelbereichs des Plungers kleiner ist als der Radius der Schüsselhalsbohrung.

Durch die an sich bekannte Aufwärts- und Abwärtsbewegung des Plungers, insbesondere in Verbindung mit einem Vorwärts- oder Rückwärtsdrehen des Plungers, kann der Glasdurchsatz sowohl über die Zeit als auch innerhalb eines Tropfenzyklus variiert werden, wobei die erfindungsgemäße Ausgestaltung des Plungers sicherstellt, dass auch bei geringen Glasdurchsätzen keine störenden Temperaturerniedrigungen in der Glasschmelze auftreten und die nachfolgende Verarbeitung des Glases problemfrei möglich ist.

Bevorzugt sind an der Umfangsfläche des zylindrischen Mittelbereichs des Plungers zur Schaffung eines Gewindesegmentplungers gleichmäßig über den Umfang verteilt mehrere Gewindesegmente vorgesehen, wobei jedes Gewindesegment von einem am Übergang von Anströmbereich und Mittelbereich beginnenden und am Übergang vom Mittelbereich zum Abströmbereich endenden, gekrümmt verlaufenden Stegabschnitt gebildet ist. Bevorzugt können die konstante Steghöhe besitzenden Stegabschnitte in ihrem Anfangs- und Endbereich leicht abgeschrägt ausgebildet sein.

Im Gegensatz zu Gewindeplungern mit mehreren umlaufenden Gewindegängen, wie sie im Stand der Technik üblich sind, werden die von Stegabschnitten gebildeten Gewindesegmente gemäß der Erfindung bevorzugt so gestaltet, dass jeder Stegabschnitt sich über einen Umfangswinkelbereich von etwa 60 bis 120°, vorzugsweise 80 bis 100° der Zylinderaußenfläche des Mittelbereichs erstreckt.

Die Steghöhe wird bevorzugt größer als die halbe Breite des Spaltes zwischen Mittelbereich und Schüsselhals gewählt. Vorzugsweise beträgt sie 60 bis 90% der Spaltbreite.

Im Falle einer extrem langsamen Arbeitsweise werden bevorzugt beheizte Auslaufdüsen verwendet, die ein Abkühlen des Glases in diesem Bereich verhindern und sicherstellen, dass die Glastemperatur innerhalb des Glastropfens weitgehend konstant bleibt.

Zur Verbesserung der Lebensdauer der eingesetzten Teile und zur Verbesserung der Glasqualität werden Keramik-Gewindesegmentplunger und Schüsselhals aus Keramik zweckmäßigerweise mit einer Platinbeschichtung versehen, was sich auch auf die Konstanz der Einstellwerte für bereits optimierte Produktionen vorteilhaft auswirkt.

Das Einsetzen einer Buchse aus Platin oder einer Platinlegierung in den Schüsselhals oder die Platinbeschichtung des Schüsselhalses verhindert des Weiteren eine verschleißbedingte Vergrößerung des Innendurchmessers dieses Schüsselhalses und damit auch eine Erhöhung des Glasdurchsatzes bei ansonsten gleichen Parametern.

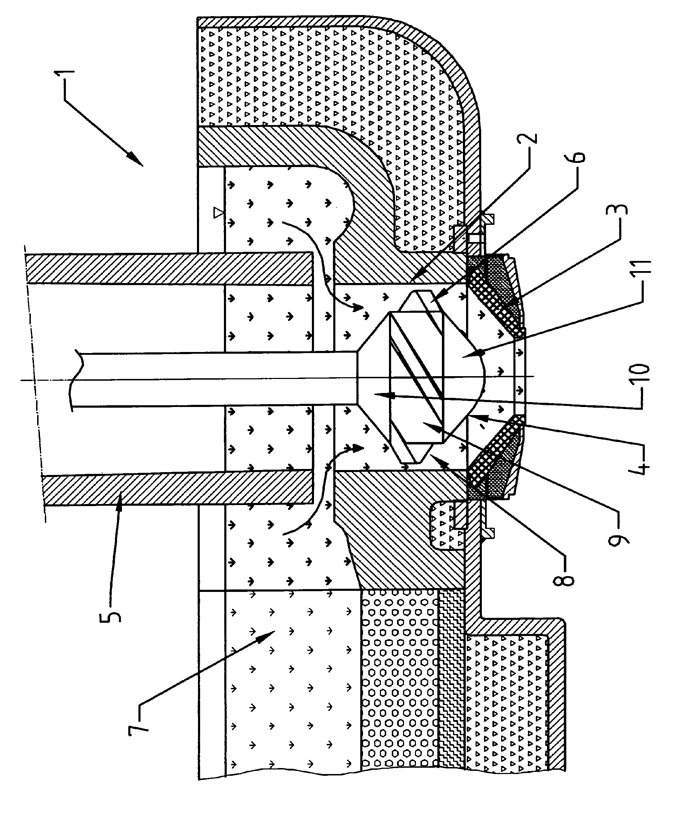

Weitere vorteilhafte Merkmale der Erfindung ergeben sich aus den Unteransprüchen und der nachfolgenden Beschreibung eines Ausführungsbeispiels anhand der Zeichnung.

Die einzige Figur der Zeichnung zeigt in schematischer Weise einen Tropfenspeiser 1 mit einem unterhalb eines Drehrohrs 5 gelegenen Schüsselhals 2, in dem sich ein Gewindesegmentplunger 4 befindet.

Dieser Gewindesegmentplunger 4 kann nach oben und unten bewegt werden und ist außerdem in beiden Drehrichtungen antreibbar.

Von besonderer Bedeutung für den Betrieb mit geringen Glasdurchsätzen ist die Formgebung des Gewindesegmentplungers 4 und dessen Dimensionierung relativ zu dem Schüsselhals 2.

Im Vergleich zu herkömmlichen Schraubenplungern und deren zugehörigen Schüsselhälsen besitzt der gemäß der Erfindung verwendete Gewindesegmentplunger eine relativ geringe Bauhöhe, d.h. die axiale Erstreckung des den Strömungsspalt 8 bestimmenden zylindrischen Mittelbereich 9 des Gewindesegmentplungers ist kleiner als der Radius der Schüsselhalsbohrung 2.

Der zylindrisch ausgestaltete Mittelbereich 9 des Gewindesegmentplungers 4 ist zwischen einem im Wesentlichen sich in Strömungsrichtung des Glases konisch erweiternden Anströmbereich 10 und einem Abströmbereich 11 gelegen, dessen Durchmesser sich zum freien Ende hin konisch verringert.

An der Umfangsfläche des zylindrischen Mittelbereichs 9 des Gewindesegmentplungers sind gleichmäßig über den Umfang verteilt mehrere Gewindesegmente 6 vorgesehen, wobei jedes Gewindesegment 6 von einem am Übergang von Anströmbereich 10 und Mittelbereich 9 beginnenden und am Übergang von Mittelbereich 9 zum Anströmbereich 11 endenden, gekrümmt nach Art eines Schraubengangabschnitts hoher Steigung verlaufenden Stegabschnitt ausgebildet ist.

Im dargestellten Ausführungsbeispiel sind vier derartige Gewindesegmente gezeigt, aber dies stellt keine einschränkende Gestaltung dar.

Die Stegabschnitte 6 verlaufen nicht über den gesamten Umfang des Mittelbereichs 9, sondern sie erstrecken sich zweckmäßigerweise über einen begrenzten Umfangswinkelbereich, der beispielsweise zwischen 60 bis 120° und insbesondere zwischen 80° und 100° liegen kann.

Zumindest über den größten Teil ihrer Länge weisen die Stegabschnitte ihre Maximalhöhe auf, wobei diese maximale Steghöhe größer als die halbe Breite des Spalts zwischen Gewindesegmentplunger 9 und Schüsselhals 2 ist. Bevorzugt erstrecken sich die Stegbereiche bis nahe an die Wandung des Schüsselhalses 2.

Im Betrieb des erfindungsgemäßen Tropfenspeisers 1 sind bei kurzzeitigem Verschließen der Auslaufdüse 3 mit einer so genannten Glasrückhaltevorrichtung und einem Abtrennen des dabei zwangsläufig etwas abgekühlten Glases, welches in direktem Kontakt mit der Verschlussplatte stand, bei entsprechendem Tropfengewicht, Zykluszeiten von mehr als einer Minute erreichbar. Eine Beheizung der Auslaufdüse verhindert auch bei extrem langsamer Arbeitsweise ein störendes Abkühlen des Glases in diesem Bereich, so dass die Glastemperatur auch innerhalb des Glastropfens weitgehend konstant bleibt.

Der Gewindesegmentplunger 4 kann aus keramischem Material, aus Quarzgut und/oder Molybdän bestehen und bevorzugt eine Beschichtung aus Platin oder einer Platinlegierung aufweisen, wobei in diesem Falle in den Schüsselhals 2 eine dessen Oberfläche bildende Buchse aus Platin oder einer Platinlegierung eingesetzt wird, um Verschleiß zu verhindern und die Lebensdauer der eingesetzten Teile und vor allem auch die Glasqualität hoch zu halten. Anstelle der Verwendung einer Buchse kann die Oberfläche des Schüsselhalses 2 auch mit einer Beschichtung aus Platin oder einer Platinlegierung versehen werden.

Um die Gewichtskonstanz der zu bildenden Tropfen auch bei geringen Glasdurchsätzen konstant zu halten, wird die Breite des Spaltes 8 zwischen Schüsselhals 2 und Mittelbereich 9 des Gewindesegmentplungers 4 derart dimensioniert, dass bei stillstehendem Gewindesegmentplunger 4 sich der durchschnittlich gewünschte Durchsatz an schmelzflüssigem Glas einstellt, das dem Schüsselhals 2 aus der im Wesentlichen horizontal gelegenen Rinne 7 zugeführt wird.

Dass dieser Glasdurchsatz durch Vorwärtsdrehen oder Rückwärtsdrehen des Gewindesegmentplungers 4 sowohl über die Zeit als auch innerhalb eines Tropfenzyklusses variiert werden kann, wurde bereits erwähnt, wobei jedoch im vorliegenden Fall von Bedeutung ist, dass die angestrebten Ziele gerade bei langen Zykluszeiten bzw. mit geringem Glasdurchsatz arbeitenden Tropfenspeiser sichergestellt werden können.

### Bezugszeichenliste

- 1: Tropfenspeiser
- 2: Schüsselhals
- 3: Auslaufdüse
- 4: Gewindesegmentplunger
- 5: Drehrohr
- 6: Gewindesegment (Stegabschnitt)
- 7: Rinne
- 8: Spalt
- 9: Mittelbereich
- 10: Anströmbereich
- 11: Abströmbereich

## Patentansprüche

1. Vorrichtung zur gewichtskonstanten Portionierung von schmelzflüssigem Glas mit einem über eine im Wesentlichen horizontale Rinne (7) aus einem Vorratsbehälter mit schmelzflüssigem Glas beschickten Tropfenspeiser (1), in dessen als vertikale Bohrung ausgebildetem Schüsselhals (2) und vor dessen Auslaufdüse (3) ein in Vertikalrichtung und/oder rotierend angetriebener Plunger (4) zur Beeinflussung des durch den Spalt (8) zwischen Schüsselhals (2) und Plunger (4) strömenden Glases angeordnet ist, wobei der Plunger (4) in Strömungsrichtung des Glases einen sich konisch erweiternden Anströmbereich (10), einen Mittelbereich (9) und einen sich im Durchmesser verringernden Abströmbereich (11) aufweist,
**dadurch gekennzeichnet,**
**dass** die axiale Erstreckung des den Strömungsspalt (8) bestimmenden zylindrischen Mittelbereichs (9) des Plungers (4) kleiner ist als der Radius der Schüsselhalsbohrung (2).

2. Vorrichtung nach Anspruch 1,
**dadurch gekennzeichnet,**
**dass** an der Umfangsfläche des zylindrischen Mittelbereichs (9) des Plungers (4) gleichmäßig über den Umfang verteilt mehrere Gewindesegmente (6) vorgesehen sind.

3. Vorrichtung nach Anspruch 2,
**dadurch gekennzeichnet,**
**dass** jedes Gewindesegment (6) von einem Stegabschnitt gebildet ist und jeder Stegabschnitt sich über einen Umfangswinkelbereich von etwa 60° bis 120°, vorzugsweise 80° bis 100° der Zylinderaußenfläche des Mittelbereichs (9) erstreckt.

4. Vorrichtung nach einem der vorhergehenden Ansprüche,
**dadurch gekennzeichnet,**
**dass** jeder Stegabschnitt über seine Höhe im Wesentlichen gleiche Dicke aufweist.

5. Vorrichtung nach einem der vorhergehenden Ansprüche,
**dadurch gekennzeichnet,**
**dass** die maximale Steghöhe größer als die halbe Breite des Spaltes (8) zwischen Mittelbereich (9) und Schüsselhals (2) ist und vorzugsweise etwa 60% bis 90% der Spaltbreite beträgt.

6. Vorrichtung nach einem oder mehreren der vorhergehenden Ansprüche,
**dadurch gekennzeichnet,**
**dass** die Breite des Spaltes (8) zwischen Schüsselhals (2) und Mittelbereich (9) des Gewindesegmentplungers (4) derart dimensioniert ist, dass bei stillstehendem Gewindesegmentplunger (4) sich der durchschnittlich gewünschte Glasdurchsatz einstellt.

7. Vorrichtung nach einem der vorhergehenden Ansprüche,
**dadurch gekennzeichnet,**
**dass** der aus keramischem Material oder Quarzgut bestehende Gewindesegmentplunger (4) eine Beschichtung aus Platin oder einer Platinlegierung aufweist und in den Schüsselhals (2) eine dessen Oberfläche bildende Buchse aus Platin oder einer Platinlegierung eingesetzt oder die Fläche des Schüsselhalses mit einer Beschichtung aus Platin oder einer Platinlegierung versehen ist.

8. Vorrichtung nach einem der Ansprüche 1 bis 6,
**dadurch gekennzeichnet,**
**dass** der Gewindesegmentplunger (4) aus Molybdän besteht.
